# EUROPÄISCHE PATENTSCHRIFT

(11) **EP 3 323 628 B1**
(45) Veröffentlichungstag und Bekanntmachung des Hinweises auf die Patenterteilung: **15.06.2022**
(21) Anmeldenummer: 17207604.4
(22) Anmeldetag: 25.02.2014
(51) Int. Cl.: B44C 1/24, B44C 5/04

(54) **VERFAHREN ZUM HERSTELLEN VON DEKORPANEELEN**
METHOD FOR PRODUCING DECORATIVE PANELS
PROCÉDÉ DE FABRICATION DE PANNEAUX DÉCORATIFS

(43) Veröffentlichungstag der Anmeldung: 23.05.2018
(62) Teilanmeldung aus: 14156483.1
(73) Patentinhaber: Akzenta Paneele + Profile GmbH, 56759 Kaisersesch (DE)
(72) Erfinder: Hoff, Egon, 56869 Mastershausen (DE)
(74) Vertreter: Michalski Hüttermann & Partner Patentanwälte mbB

(56) Entgegenhaltungen:
- EP-A1- 1 842 661
- EP-A1- 2 402 174
- EP-A1- 2 857 221
- WO-A1-01/48333
- WO-A1-02/28665
- DE-A1- 19 842 510
- US-A- 5 529 812

## Beschreibung

Die vorliegende Erfindung betrifft ein Verfahren zum Herstellen von Dekorpaneelen. Die vorliegende Erfindung betrifft insbesondere ein Verfahren zum verbesserten Strukturieren einer lackhaltigen Deckschicht eines Dekorpaneels im Rahmen einer Herstellung von Dekorpaneelen. Die vorliegende Erfindung betrifft ferner ein Dekorpaneel.

Unter dem Begriff Dekorpaneel sind im Sinne der Erfindung Wand-, Decken, Tür- oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen. Die Dekorpaneele weisen dabei vielfach ein Dekor und eine Oberflächenstrukturierung auf, welche einen Naturwerkstoff imitieren soll.

Beispiele für solche nachempfundenen Naturwerkstoffe sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Nachdem CD 40970 / UAM gegebenenfalls noch auf der dem Dekorpapier gegenüberliegenden Seite der Trägerplatte ein Gegenzugpapier aufgebracht wurde, wird der erhaltene Schichtenaufbau unter Verwendung geeigneter druck- und/oder wärmeaktivierter Klebemittel fest miteinander verbunden.

Zum Schutz der aufgebrachten Dekorschicht sind in der Regeln Verschleiß- oder Deckschichten oberhalb der Dekorschicht aufgebracht. Vielfach ist es vorgesehen, dass in solche Verschleiß- oder Deckschichten eine eine Dekorvorlage imitierende Oberflächenstrukturierung eingebracht ist, so dass die Oberfläche des Dekorpaneels eine haptisch wahrnehmbare Struktur aufweist, welche ihrer Form und ihrem Muster dem aufgebrachten Dekor angepasst ist, um so eine möglichst originalgetreue Nachbildung eines natürlichen Werkstoffes auch hinsichtlich der Haptik zu erhalten.

Bei dem Ausbilden der Deckschicht mit Lacken wird die Struktur dabei eingebracht durch eine sogenannte Positivstrukturierung, bei welcher die Strukturen aufgebaut werden durch das Aufbringen einer Lackschicht und dabei insbesondere durch das selektive Aufbringen der erhabenen Bereiche der Struktur. Dies wird oftmals realisiert durch negativ strukturierte Prägemittel, welche die Lackschicht entsprechend aufbringen können. Nachteilig an derartigen Verfahren kann es sein, dass insbesondere großflächige Bereich aufgebracht werden können, das Ausbilden von kleinen und lokal begrenzten Bereichen, wie etwa von Poren, jedoch nur schwer möglich ist. Daraus resultierend ist ein besonders realitätsnaher Eindruck der Struktur durch eine Positivstrukturierung von Lacken meist nur begrenzt möglich. Eine Negativstrukturierung von lackhaltigen Deckschichten war bisher jedoch nicht mit ausreichender Qualität möglich.

WO 01/48333 A1 beschreibt ein Verfahren zum Herstellen von Oberflächenelementen mit einer dekorativen Oberseite, beispielsweise für die Verwendung als Bodenbelag. Bei einem derartigen Verfahren wird ein Kern, wie etwa eine Faserplatte oder eine Kunststoff enthaltende Platte, mit einem Dekor versehen, insbesondere mittels Digitaldruck bedruckt. Auf die bedruckte Oberfläche wird eine zumindest teilweise transparente Deckschicht aufgebracht. Die Deckschicht kann beispielsweise ein Overlay umfassen oder einen UVhärtbaren Lack. Die Deckschicht kann ferner durch das Einpressen von Strukturen mit einer Strukturierung versehen werden. Dabei kann es ferner vorgesehen sein, die Deckschicht als eine Mehrzahl von Lagen aufzubringen, welche nach dem Auftragen und vor dem Auftragen der jeweils nächsten Schicht angehärtet werden.

WO 02/28665 A1 beschreibt ein Verfahren zur Herstellung eines dekorativen Oberflächenelements, wobei das Element eine Grundschicht, ein Dekor und eine Verschleißschicht aus einem UV- oder Elektronenstrahl-heilenden Lack umfasst. Eine oder mehrere strukturierte Oberflächen, die Prägeoberflächen einer oder mehrerer Walzen oder Formen bilden, werden auf der dekorierten lackierten Oberfläche positioniert, möglicherweise nachdem der Lack auf eine gewünschte Viskosität gehärtet wurde, und werden kontinuierlich oder diskontinuierlich darauf aufgepresst. Der Lack wird mit einer Oberflächenstruktur versehen, die die dekorative Wirkung des Dekors verstärkt. Die Verschleißschicht wird dann vollständig ausgehärtet.

US 5 529 812 A beschreibt ein Verfahren zur Herstellung von Dekorplatten, die lackiert werden, elektronenstrahlgehärtet werden auf 60-95%, einer Pressbehandlung unterzogen werden und dann zu 100% elektronenstrahlgehärtet werden.

EP 2 402 174 A1 beschreibt das Bereitstellen einer Holzwerkstoffplatte und das Aufbringen einer Grundierung in Form einer Kunstharzschicht auf einer Oberseite der Holzwerkstoffplatte. Eine Schichtstruktur wird unter Einfluss von Druck und Temperatur eingespritzt, wobei die Schichtstruktur aus der Holzwerkstoffplatte, der Grundierung und einer Beschichtung besteht. Die Grundierung und die Holzwerkstoffplatte sind in einzelne grundierte Platten unterteilt. Die Seiten der grundierten Paneele sind maschinell zugeschnitten, um Verbindungs- und Verriegelungseinheiten zu bearbeiten.

DE 198 42 510 A1 beschreibt ein Verfahren zur Herstellung von dekorativen funktionellen Oberflächenbeschichtungen umfasst das Bestrahlen von Lack- und Lackschichten aus Acrylat, Epoxid, Vinylether und / oder Styrol mit einem monochromatischen kurzwelligen UV-Licht unter Ausbildung von Mikrofaltungen.

EP 1 842 661 A1 beschreibt eine dekorative Folie, bei der die regenbogenfarbenen Interferenzstreifen, die durch Bestrahlung mit Licht wie einer Leuchtstofflampe verursacht werden, selbst dann nicht zu sehen sind, wenn die Spiegeloberflächenbehandlung oder die Farbschicht der Primärfarbe angepasst ist. In der Dekorfolie mit einem Substrat, einer Farbschicht, einer Klebstoffschicht und einer transparenten Harzschicht ist eine Interferenzverhinderungsschicht auf einer Oberfläche der transparenten Harzschicht vorgesehen, wobei die Oberfläche auf der gegenüberliegenden Seite zu einer anderen Oberfläche ist, mit der sie in Kontakt steht.

Das nachveröffentlichte Dokument EP 2 857 221 A1 beschreibt ein Verfahren zum Herstellen eines Paneels sowie ein solches Paneel, wobei das Verfahren die Schritte umfasst: Bereitstellen einer Trägerplatte, Aufbringen eines Dekors auf eine Oberseite der Trägerplatte, Abdecken des Dekors mit einem Lackaufbau, welcher eine oder mehrere Lackschichten umfasst, wobei eine äußere Decklackschicht zunächst mit VUV-Licht teilpolymerisiert wird, sodass eine Mikrofaltung auftritt, und anschließend eine vollständige Polymerisation des Lackaufbaus mittels einer Elektronenstrahlhärtung ausgeführt wird.

Dies berücksichtigend ist es die Aufgabe der vorliegenden Erfindung, ein Verfahren zum Herstellen eines Dekorpaneels anzugeben, welches das aus dem Stand der Technik bekannte Probleme zumindest teilweise zu überwinden vermag.

Gelöst wird diese Aufgabe durch ein Verfahren gemäß Anspruch 1. Gelöst wird diese Aufgabe ferner durch ein Dekorpaneel gemäß Anspruch 5. Vorteilhafte Ausgestaltungen der vorliegenden Erfindung sind in den abhängigen Ansprüchen sowie in der weiteren Beschreibung angegeben, wobei die Ausgestaltungen einzeln oder in Kombination eine Weiterbildung der Erfindung darstellen können.

Mit der vorliegenden Erfindung wird ein Verfahren zum Herstellen eines Dekorpaneels vorgeschlagen, aufweisend die Verfahrensschritte:
a) Bereitstellen eines Trägers,
b) Aufbringen eines Dekors auf zumindest einen Teilbereich des Trägers,
c) Aufbringen einer lackhaltigen Deckschicht auf das Dekor, wobei
d) die lackhaltige Deckschicht teilgehärtet wird; und
e) im Anschluss an das nur teilweise Härten der Deckschicht diese mit einer Strukturierung versehen wird, wobei
f) Verfahrensschritt e) zumindest teilweise durch eine Negativstrukturierung erfolgt; und
g) die lackhaltige Deckschicht nach Verfahrensschritt e) endgehärtet wird dadurch gekennzeichnet, dass
die lackhaltige Deckschicht mit einer Dicke aufgebracht wird, die in einem Bereich von zwischen ≥ 1µm und ≤ 5mm liegt, und das Teilhärten der lackhaltigen Deckschicht durchgeführt wird unter Verwendung einer Strahlungsquelle mit einer Leistung in einem Bereich von < 80 W, und dass ein Teilhärten der Deckschicht realisiert wird unter Ausbildung eines Härtungsgradienten und wobei der Härtungsgradient in Richtung der Dicke der Deckschicht realisiert wird, wobei der Härtungsgradient in Richtung der Dicke der Deckschicht derart ausgebildet wird, dass ein Oberflächenbereich der Deckschicht vergleichsweise stärker gehärtet wird, als ein tiefergehender Bereich der Deckschicht.

In überraschender Weise hat sich gezeigt, dass dann, wenn die lackhaltige Deckschicht vor einer Strukturierung teilgehärtet wird und im Anschluss an ein derartiges Teilhärten mit einer Strukturierung versehen wird, bevor eine Endhärtung stattfindet, eine Negativstrukturierung der lackhaltigen Deckschicht und damit eine besonders detailgetreue Strukturierung beziehungsweise eine besonders detailgetreue Wahrnehmung der aufgebrachten Struktur ermöglicht werden kann. Insbesondere wird somit das Durchführen einer Negativstrukturierung bei einer Lackschicht ermöglicht, also insbesondere auch lokal begrenzte Vertiefungen der Struktur, etwa nachbildend Poren, etwa mittels eines Prägemittels, einzubringen, was den Wahrnehmungseindruck der Strukturierung signifikant verbessern kann.

Hierzu umfasst das Verfahren gemäß Verfahrensschritt a) zunächst das Bereitstellen eines insbesondere plattenförmigen Trägers. Insbesondere kann dabei das Material des Trägers in Abhängigkeit des gewünschten Einsatzbereichs gewählt sein. So kann der Träger beispielsweise aus einem Holzwerkstoff bestehen oder diesen umfassen, sofern das Dekorpaneel keiner übermäßigen Feuchtigkeit oder Witterungsbedingungen ausgesetzt ist. Soll das Paneel hingegen beispielsweise in Feuchträumen oder im Außenbereich eingesetzt werden, kann der Träger beispielsweise aus einem Kunststoff bestehen oder diesen umfassen.

Holzwerkstoffe im Sinne der Erfindung sind dabei neben Vollholzwerkstoffen auch Materialien wie z.B. Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH) , sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Kunststoffe, welche bei der Herstellung entsprechender Paneele beziehungsweise der Träger eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Ein derartiger Träger kann dabei im Wesentlichen ein solcher Träger sein, wie er dem Fachmann aus dem Stand der Technik grundsätzlich bekannt ist.

In einem weiteren Verfahrensschritt umfasst das vorbeschriebene Verfahren gemäß Verfahrensschritt b) das Aufbringen eines Dekors, welches beispielsweise eine Dekorvorlage nachbilden oder diese imitieren soll, auf zumindest einen Teilbereich des Trägers. In diesem Verfahrensschritt wird somit zumindest ein Teilbereich des Trägers, insbesondere der vollständige Träger, mit einem derartigen Dekor versehen.

Unter einer "Dekorvorlage" kann dabei im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Das Aufbringen des Dekors kann beispielsweise realisiert werden, indem unmittelbar auf den Träger das Dekor aufgebracht wird, beispielsweise durch ein Druckverfahren. Dabei kann ferner auf dem Träger ein geeigneter Druckuntergrund vorgesehen sein. Alternativ ist es im Sinne der vorliegenden Erfindung nicht ausgeschlossen, dass das Dekor derart aufgebracht wird, dass beispielsweise eine bereits bedruckte Faserschicht, wie beispielsweise Papierschicht, oder auch eine bereits bedruckte Folie, wie beispielsweise aus Polyethylen, Polypropylen oder Polyvinylchlorid, auf den Träger aufgebracht wird.

Im Sinne der Erfindung sind unter dem Begriff Faserwerkstoffe Materialien wie z.B. Papier und Vliese auf Basis pflanzlicher, tierischer, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind aus Mineralwolle oder Glaswolle.

Gemäß dem weiteren Verfahrens schritt c) wird folgend eine lackhaltige Deckschicht auf das Dekor aufgebracht.

Eine auch als Verschleißschicht bezeichnete Deckschicht im Sinne der Erfindung ist insbesondere eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen wie beispielsweise Abrieb schützt. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Verschleißschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Verschleißschichtzusammensetzung eine stabile Dispersion ausbildet und eine Entmischung bzw. ein Absetzten des Hartstoffes in der Verschleißschichtzusammensetzung vermieden werden kann. Zur Ausbildung einer entsprechenden Verschleißschicht ist es in einer Ausgestaltung der Erfindung vorgesehen, dass die Hartstoff enthaltende und Zusammensetzung in einer Konzentration zwischen 10 g/m² und 250 g/m², vorzugsweise zwischen 25 g/m² und 100g/m² aufgetragen wird. Die Auftragung der Deckschicht kann beispielsweise mittels Walzen, wie Gummiwalzen oder mittels Gießvorrichtungen aufgetragen werden. In einer weiteren Ausgestaltung der Erfindung kann es vorgesehen sein, dass der Hartstoff zum Zeitpunkt des Auftrages der Verschleißschichtzusammensetzung nicht in der Zusammensetzung enthalten ist, sondern als Partikel auf die aufgetragenen Verschleißschichtzusammensetzung aufgestreut wird und diese im Anschluss gehärtet wird.

Dabei ist dabei ist ferner vorgesehen, dass die Deckschicht lackhaltig ist. Unter einer lackhaltigen Deckschicht kann dabei im Sinne der vorliegenden Erfindung insbesondere verstanden werden, eine Deckschicht, die insbesondere strahlungshärtbare Komponenten enthält. Als Lacke können dabei insbesondere derartige Stoffe verstandent werden, die durch UV-Strahlung gehärtet werden können.

Der Vorteil einer lackhaltigen Deckschicht kann insbesondere darin gesehen werden, dass diese besonders stabil sein kann und dabei in der Verarbeitung besonders wenige Emissionen, wie beispielsweise Geruchsemissionen, freisetzt.

Bei einem vorbeschriebenen Verfahren ist es ferner vorgesehen, dass bei einem weiteren Verfahrensschritt d) die lackhaltige Deckschicht teilgehärtet wird. Dieser Verfahrensschritt des nur teilweisen Härtens der Deckschicht ermöglicht es, die Deckschicht besonders vorteilhaft vorzubereiten für eine Negativstrukturierung, wie dies nachfolgend im Detail beschrieben wird.

Im Anschluss an das vorbeschriebene Teilhärten wird die Deckschicht gemäß Verfahrens schritt e) mit einer Strukturierung versehen, wobei dieser Schritt gemäß Verfahrens schritt f) zumindest teilweise durch eine Negativstrukturierung erfolgt. In diesem Schritt wird die Deckschicht somit mit einer Struktur versehen, welche beispielsweise einer Dekorvorlage entsprechen kann bzw. diese idealerweise vorlagenidentisch nachbilden kann. Alternativ können für ein derartiges Dekor übliche Strukturen eingebracht werden, welche nicht zwingend vorlagenidentisch ausgebildet sein müssen, sondern ein derartiges Dekor beziehungsweise eine jeweilige Dekorvorlage imitieren können. Dabei können beispielsweise Poren einer Holzimitation und/oder andere Oberflächenstrukturen in die Deckschicht eingebracht werden. Dieser Verfahrensschritt erfolgt dabei durch eine so genannte Negativstrukturierung. Unter einer Negativstrukturierung kann dabei im Sinne der vorliegenden Erfindung insbesondere verstanden werden, dass nicht, wie es bei Lacksystemen gemäß dem Stand der Technik üblich ist, erhabene Bereiche auf einer Grundfläche definiert aufgetragen werden, sondern vielmehr im Gegensatz dazu Vertiefungen eingepresst werden. Dies kann beispielsweise realisierbar sein, durch ein Prägewerkzeug, welches beispielsweise als Prägewalze ausgestaltet sein kann. Die Prägewalze kann beispielsweise zumindest an der Prägeoberfläche aus einem Metall ausgestaltet sein, beispielsweise eine Stahlwalze sein, oder ebenfalls wenigstens an der Prägeoberfläche aus einem Kunststoff geformt sein. Dabei kann der Kunststoff insbesondere ein Hartkunststoff sein, wobei ein Hartkunststoff im Rahmen der vorliegenden Erfindung insbesondere ein derartiger Kunststoff sein kann, der eine Härte in einem Bereich von ≥ 80 Shore, beispielsweise ≥ 100 Shore, gemessen nach DIN EN ISO 868, aufweist.

Es kann dabei vorgesehen sein, dass die Strukturierung der Deckschicht vollständig durch ein Negativverfahren erfolgt, es ist jedoch im Rahmen der Erfindung nicht ausgeschlossen, dass Teile der Deckschicht durch eine Positivstrukturierung strukturiert werden, also erhabene Bereiche definiert aufgetragen werden können.

Insbesondere ist es bevorzugt, dass die Aufbringung der Struktur beziehungsweise das Einprägen der Struktur in Übereinstimmung mit dem aufgebrachten Dekor der Trägerplatte erfolgt, um eine möglichst originalgetreue Nachbildung eines natürlichen Werkstoffes zu erhalten. Dabei kann es vorgesehen sein, dass die Strukturierung der Deckschicht mittels geeigneter optischer Verfahren erfolgt und eine Ausrichtung des Prägewerkzeugs und der Trägerplatte zueinander in Abhängigkeit des erfassten Dekors erfolgt. Zur Ausrichtung des Prägemittels und der Trägerplatte zueinander kann es dabei vorgesehen sein, dass eine zur Ausrichtung notwendige Relativbewegung zwischen Prägewerkzeug und Trägerplatte zueinander durch eine Verschiebung der Trägerplatte oder durch eine Verschiebung des Prägewerkzeugs erfolgt.

Dadurch, dass vor einem Einbringen der Strukturierung die lackhaltige Deckschicht nicht vollständig, sondern nur teilweise gehärtet beziehungsweise nur angehärtet wird, kann die Deckschicht derart vorbehandelt werden, dass ein Prägemittel die entsprechende Struktur in die Deckschicht einprägen kann und die Struktur ferner nach dem Einbringen ihre Form zumindest bis zu einem vollständigen Härten beibehalten kann. Somit kann der Nachteil der Behandlung einer lackhaltigen Schicht aus dem Stand der Technik umgangen werden, wonach eine Negativprägung nicht möglich war. Ein grundsätzliches Ziel der Teilhärtung beispielsweise der gesamten Deckschicht oder nur eines definierten Bereichs derselben ist dabei insbesondere, die Deckschicht derart zu behandeln, dass eine ausreichende Stabilität für eine dauerhafte Strukturierung auch nach dem Entfernen des Prägemittels von der Deckschicht gegeben ist. Weiterhin soll jedoch eine ausreichende Flexibilität der Deckschicht gegeben sein, um durch das Prägemittel problemlos eine Strukturierung in die Deckschicht einfügen zu können. In überraschender Weise hat sich gezeigt, dass das Vorstehende insbesondere durch das Durchführen einer Teilhärtung der Deckschicht ermöglicht werden kann.

Im Anschluss an das Einbringen der Struktur in die Deckschicht wird diese dann gemäß Verfahrensschritt g) endgehärtet beziehungsweise vollständig ausgehärtet Durch das vorbeschriebene Verfahren wird es somit zusammenfassend ermöglicht, durch ein Negativstrukturieren der lackhaltigen Deckschicht eine Strukturierung zu erzeugen, durch welche der Wahrnehmungseindruck des dekorierten Paneels besonders nah an das Original bzw. an die Dekorvorlage heran reicht. In anderen Worten können durch das vorbeschriebene Verfahren qualitativ besonders hochwertige Dekorpaneele erzeugt werden.

Erfindungsgemäß wird ein Teilhärten der Deckschicht realisiert unter Ausbildung eines Härtungsgradienten. Dies soll im Rahmen der vorliegenden Erfindung insbesondere bedeuten, dass in der Deckschicht Bereiche vorliegen, die teilgehärtet sein können und dabei eine vergleichsweise geringe Härtung aufweisen oder die auch vollständig ungehärtet sein können, und dass ferner in der Deckschicht Bereiche vorliegen, die teilgehärtet sind und eine vergleichsweise höhere Härtung aufweisen, wobei die jeweiligen Bereiche lokal begrenzt, also mit einem Härtungsgradienten beziehungsweise mit einem räumlichen Härtungsgradienten, vorliegen. Dabei kann insbesondere die Kombination von vergleichsweise weniger gehärteten Bereichen beziehungsweise ungehärteten zu vergleichsweise stärker gehärteten Bereichen und damit von vergleichsweise flexiblen zu vergleichsweise stabilen Bereichen in der Deckschicht in besonders vorteilhafter Weise ein eine Kombination von flexiblen zu stabilen Bereichen und dadurch ein Negativstrukturieren der lackhaltigen Deckschicht ermöglichen.

Dabei ist es vorgesehen, dass ein Härtungsgradient realisiert wird in Richtung der Dicke der Deckschicht. Erfindungsgemäß wird in anderen Worten somit insbesondere die Oberfläche bzw. ein Oberflächenbereich der Deckschicht vergleichsweise stärker gehärtet, wobei tiefergehende Bereiche der Deckschicht im Vergleich zu den Bereichen der Oberfläche der Deckschicht weniger gehärtet sind. Beispielsweise kann eine Härtung stattfinden an der Oberfläche der Deckschicht und dabei in einem räumlichen Bereich, der ungefähr einem Bereich von ≤ 50% bezogen auf die Gesamtdicke der aufgetragenen Deckschicht, etwa in einem Bereich von ≥ 20% bis ≤ 40% bezogen auf die Gesamtdicke der aufgetragenen Deckschicht beträgt. Beispielsweise kann das obere Drittel beziehungsweise die oberen 33% der Deckschicht eine vergleichsweise höhere Härtung aufweisen, als der restliche Bereich der Deckschicht. In dieser Ausgestaltung kann somit beispielsweise die Oberfläche sozusagen angeliert werden, wobei tiefergehende Bereiche der Deckschicht nur geringfügig angehärtet sind. In dieser Ausgestaltung kann ermöglicht werden, dass durch die vergleichsweise flexiblen Bereiche im Inneren der Deckschicht ein Prägemittel problemlos in die Deckschicht eindringen und somit eine Struktur einprägen kann, durch die vergleichsweise stärker angehärteten Bereiche an der Oberfläche der Deckschicht jedoch eine ausreichende Stabilität erzeugt werden kann, dass die Struktur nach Entfernen des Prägemittels zumindest bis zu einem vollständigen Endhärten der Deckschicht bestehen bleiben kann. In dieser Ausgestaltung kann insbesondere eine wenig zeitaufwändige Härtung realisiert werden, so dass ein Herstellungsverfahren für ein Dekorpaneel in dieser Ausgestaltung besonders ökonomisch durchführbar sein kann. Dabei kann eine derartige Härtung bereits ausreichen, um eine problemlose Negativstrukturierung durchführen zu können.

Im vorbeschriebenen Verfahren ist vorgesehen, dass ein Teilhärten der lackhaltigen Deckschicht durchgeführt wird unter Verwendung einer Strahlungsquelle beziehungsweise mit einer Leistung der Strahlungsquelle in einem Bereich von < 80 W, beispielweise in einem Bereich von ≥5W bis ≤ 50 W, besonders bevorzugt ≥ 30W bis ≤ 40 W. Zusätzlich kann es vorgesehen sein, dass ein Teilhärten der lackhaltigen beziehungsweise strahlungshärtbaren Deckschicht durchgeführt wird unter Verwendung einer Strahlung mit einer Wellenlänge in einem Bereich von ≥ 200nm bis ≤ 380nm, beispielsweise in einem Bereich von ≥ 240nm bis ≤ 280nm, beispielsweise bei 254nm. Dabei kann als Strahlungsquelle beispielsweise eine Niederdrucklampe beziehungsweise Kurzwellenstrahler verwendet werden, wie etwa ein Galliumstrahler.

Insbesondere das Erzeugen beziehungsweise Verwenden einer Strahlung in dem vorgenannten Leistungsbereich und ggf. unter Verwendung einer vorbeschriebenen Wellenlänge im UV-Wellenbereich kann das Erzeugen einer Teilhärtung und dabei auch das Erzeugen eines Härtungsgradienten in besonders vorteilhafter Weise ermöglichen. Die vorgenannten Leistungswerte stehen dabei im Gegensatz zu den im Stand der Technik bekannten Werten, bei denen insbesondere eine Strahlung im Langwellenbereich bzw. eine hohe Strahlungsleistung von üblicherweise mehr als mehr als 80W, beispielsweise bis zu 200W, verwendet wird. Im Gegensatz zu den aus dem Stand der Technik bekannten Strahlungsparametern kann in überraschender Weise insbesondere in dieser Ausgestaltung auf besonders einfache Weise ermöglicht werden, dass die verwendete Strahlung beispielsweise nicht die vollständige Dicke der Deckschicht durchdringt und damit ein vollständiges Härten bewirkt, sondern vielmehr regulierbar und definierbar beispielsweise nur ein definierter Oberflächenbereich der Deckschicht einer Härtung unterworfen wird, oder dass die gesamte Deckschicht nur teilweise aber noch nicht endgehärtet wird. Somit kann insbesondere durch Verwenden einer Strahlung unter Einsatz der vorbeschriebenen Parameter auf besonders sichere und definierte Weise ein gewünschter Strahlungsgradient eingestellt werden.

Beispielsweise kann unter Verwendung einer Wellenlänge in dem vorbeschriebenen Bereich, etwa bei weniger als 300nm, beispielsweise bei 254nm, ein Oberflächenberiech einer Dicke von 3 bis 4 µm gehärtet werden. Somit kann, wenn die Deckschicht etwa eine derartige Dicke aufweist, die gesamte Deckschicht teilgehärtet werden. Dies kann nicht beschränkend der Fall sein bei einem Auftrag der Deckschicht mit einer Menge von 30-40 g/m². Werden größere Mengen der Deckschicht aufgebracht, etwa wenn die Oberfläche des Dekors zu uneben ist, kann dann der unterhalb des vorbeschriebenen Dickenbereichs vorliegende Bereich der Deckschicht durch die Strahlen der vorbeschriebenen Wellenlänge unbehandelt bleiben. Dann kann es von Vorteil sein, vor einem Behandeln der Oberfläche der Deckschicht die gesamte Deckschicht anzuhärten, etwa unter Verwendung einer Wellenlänge in einem Bereich von 340-360 nm, und anschließend die Oberfläche der Deckschicht durch eine Wellenlänge in dem vorbeschriebenen Bereich, etwa bei weniger als 300nm, beispielsweise bei 254nm, verstärkt teilzuhärten. Somit kann auch eine zweistufige Teilhärtung der Deckschicht von Vorteil sein. Grundsätzlich kann die Dicke des vergleichsweise stärker gehärteten Oberflächenbereichs abhängen von den gewählten Parametern, wie insbesondere Wellenlänge der verwendeten Strahlung und Leistung der Strahlungsquelle.

In einer weiteren Ausgestaltung des vorbeschriebenen Verfahrens kann der Abstand der Strahlungsquelle zu der zu strukturierenden Oberfläche der Deckschicht veränderbar sein. Dabei kann es beispielsweise vorgesehen sein, dass insbesondere der Abstand von der Strahlungsquelle zu der Oberfläche der Deckschicht veränderbar ist beziehungsweise die Strahlungsquelle etwa entsprechend von der Deckschicht weg oder zu der Deckschicht hin verlagerbar sein kann. Insbesondere in dieser Ausgestaltung kann das Verfahren besonders anpassbar sein, da mit einer Strahlungsquelle beispielsweise unterschiedliche Schichtdicken der Deckschicht wie auch unterschiedlichste Materialien der Deckschicht durch Variation des Abstands behandelt und dabei beispielsweise ein Härtungsgradient eingestellt werden kann. Somit kann insbesondere in dieser Ausgestaltung es möglich sein, dass ein besonders definiert einstellbarer Oberflächenbereich der Deckschicht vergleichsweise stärker gehärtet wird, als beispielsweise weitere Bereiche der Deckschicht.

Im vorbeschriebenen Verfahren ist die lackhaltige Deckschicht mit einer Dicke aufgebracht, die in einem Bereich von zwischen ≥ 1µm und ≤ 5mm, vorzugsweise zwischen ≥ 1µm und ≤ 20µm liegt. Derartige Dicken der Deckschicht können bereits ausreichen, um zum einen eine höchst realistische Oberflächenstrukturierung einbringen zu können, und dabei weiterhin einen wie vorstehend beschrieben ausgestalteten Härtungsgradienten einstellen zu können. Denn bereits bei derartigen Dicken kann beispielsweise vermieden werden, dass die Deckschicht durch die Gesamtdicke gleichermaßen gehärtet wird sondern es kann vielmehr erlaubt werden, dass beispielsweise ein Oberflächenbereich der Deckschicht gehärtet wird, wohingegen ein tieferliegender Bereich der Deckschicht vergleichsweise weniger gehärtet ist. Die konkrete zu verwendende Dicke ist dabei in für den Fachmann verständlicher Weise anzupassen beispielsweise an die aufzubringende Struktur oder andere anwendungsbezogene Parameter.

In einer weiteren Ausgestaltung des vorbeschriebenen Verfahrens kann die lackhaltige Deckschicht einen Acrylat-basierten Lack aufweisen. Insbesondere kann die Deckschicht ein oder mehrere Acrylate aufweisen, die insbesondere modifiziert sein können durch Polyurethan (PU) beziehungsweise können Acrylat-/Polyurethan-Systeme Verwendung finden. Insbesondere derartige Lacksysteme können eine besonders kratz- und stoßfeste Deckschicht ausbilden, was das herzustellende Dekorpaneel besonders widerstandsfähig machen kann. Dabei wurde es erst durch die vorliegende Erfindung möglich, derartige Lacksysteme mit einer Negativstrukturierung zu versehen, um so einen besonders hochwertigen Struktureindruck mit den Vorteilen der Lackschicht zu ermöglichen.

In einer weiteren Ausgestaltung des vorbeschriebenen Verfahrens kann das Dekor durch ein Direktdruckverfahren aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht oder Folienwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Beispielsweise kann auf dem Träger ein Druckuntergrund für ein durch Direktdruck, insbesondere Digitaldruck, aufzubringendes Dekor vorgesehen sein, welcher ein sogenannter Primer sein kann. Dabei kann etwa ein solcher verwendet werden, der auf Basis eines Urethanacrylates ausgebildet ist. Dabei kann das Urethanacrylat in Form von reaktiven Oligomeren bzw. Prepolymeren in der Primer-Zusammensetzung enthalten sein. Unter dem Begriff "reaktives Oligomer" bzw. "Prepolymer" ist dabei im Sinne der Erfindung eine Urethanacrylat-Einheiten aufweisende Verbindung zu verstehen, welche strahlungsinduziert, ggf. unter Zusatz eines reaktiven Bindemittels oder eines Reaktivverdünners zu Urethanacrylat-Polymer reagieren kann. Der Primer kann im erfindungsgemäßen Verfahren bevorzugt mittels Gummiwalzen auf die Trägerplatte aufgebracht werden. Bevorzugt wird der Primer in einer Menge zwischen ≥1 g/m² und ≤100 g/m², vorzugsweise zwischen ≥10 g/m² und ≤50 g/m², insbesondere zwischen ≥20 g/m² und ≤40 g/m² aufgetragen. Im Anschluss an den Auftrag des Primers auf die Trägeroberfläche erfolgt eine Bestrahlung mit einer Strahlungsquelle geeigneter Wellenlänge.

Dabei ist es unabhängig vom eingesetzten Druckverfahren bevorzugt, dass das Dekor mittels strahlungshärtbarer Farben oder Tinten aufgebracht wird. Unter dem Begriff strahlungshärtbare Farbe ist dabei im Sinne der Erfindung eine binde- und/oder füllmittelmittelhaltige sowie Farbpigmente aufweisende Zusammensetzung zu verstehen, welche induziert durch elektromagnetische Strahlung geeigneter Wellenlänge, wie z.B. UV-Strahlung, oder Elektronenstrahlung zumindest teilpolymerisiert werden kann. Unter dem Begriff strahlungshärtbare Tinte ist dabei im Sinne der Erfindung eine im Wesentlichen Füllmittel freie, Farbpigmente aufweisende Zusammensetzung zu verstehen, welche induziert durch elektromagnetische Strahlung geeigneter Wellenlänge, wie z.B. UV-Strahlung, oder Elektronenstrahlung zumindest teilpolymerisiert werden kann.

Es kann ferner vorgesehen sein, dass insbesondere vor einem Druckwerk eines Direktdruckverfahrens, beispielsweise umfassend einen Tintenstrahldrucker, der zu bedruckten Träger mit einer Vorrichtung zum Ableiten elektrostatischer Ladungen behandelt wird. Dadurch kann ein besonders genaues Druckbild ermöglicht werden, da verhindert werden kann, dass die sich im Laufe des Produktionsprozesses aufbauende undefinierte elektrostatische Ladung in den zu bedruckenden Trägern zu einer undefinierten Ablenkung der Farb- bzw. Tintentropfen auf Ihrem Weg vom Druckkopf zur zu bedruckenden Oberfläche führt. Die Vorrichtung zum ableiten elektrostatischer Ladungen kann beispielsweise gebildet sein durch ein Ionisierungsgebläse, welches ionisierte Luft über den Träger leitet. Weiterhin kann es vorgesehen sein, dass die Einrichtung zur Ableitung elektrostatischer Ladungen wenigstens eine Rolle, Bürste oder Lippe aus einem leitfähigen Material aufweist, welche den Träger zumindest im Bereich des Druckwerks elektrisch leitend kontaktiert und welche mit einem elektrischen Massenpotential verbunden ist. Das elektrische Massenpotential kann beispielsweise durch eine Erdung bereitgestellt werden.

Hinsichtlich weiterer technischer Merkmale und Vorteile des erfindungsgemäßen Verfahrens wird hiermit explizit auf die Erläuterungen im Zusammenhang mit dem erfindungsgemäßen Dekorpaneel, den Figuren sowie der Figurenbeschreibung verwiesen.

Gegenstand der vorliegenden Erfindung ist ferner ein Dekorpaneel, aufweisend einen insbesondere plattenförmigen Träger, ein Dekor und eine nicht strukturierte lackhaltige Deckschicht. Das Dekorpaneel ist dabei dadurch gekennzeichnet, dass die nicht strukturierte lackhaltige Deckschicht nicht vollständig, sondern lediglich teilgehärtet ist. Durch ein Teilhärten der Deckschicht kann in besonders vorteilhafter Weise eine Zwischenstufe beziehungsweise ein Halbzeug gefertigt werden, welches bezüglich einer nachfolgenden Strukturierung besonders vorteilhafte Eigenschaften aufweist. So kann die Deckschicht insbesondere eine ausreichende Flexibilität aufweisen, um das Eindringen eines Prägemittels, wie beispielsweise einer Prägewalze, zu ermöglichen, und dabei ferner eine ausreichende Stabilität aufweisen, um die eingeprägte Struktur bis zu einem vollständigen Härten beizubehalten. Dabei wird auch dieses Zwischenprodukt bereits als Dekorpaneel bezeichnet, da es einen Träger aufweist, der bereits mit einem Dekor versehen ist, auch wenn insbesondere die Oberflächenstruktur und gegebenenfalls die Größe noch von dem Endprodukt abweichen kann. Ein derartiges Zwischenprodukt beziehungsweise eine derartige Zwischenstufe kann dabei insbesondere dazu dienen, in die noch nicht strukturierte lackhaltige Deckschicht mittels eines Negativverfahrens beziehungsweise mittels einer Negativstrukturierung eine eine Dekorvorlage imitierende Struktur einzuprägen. Dies kann einen Wahrnehmungseindruck schaffen, der besonders realistisch ist.

Erfindungsgemäß ist dabei die Deckschicht mit einem Härtungsgradienten teilgehärtet, wobei ein räumlicher Härtungsgradient vorliegt in Richtung der Dicke der Deckschicht. Die Kombination von vergleichsweise weniger gehärteten Bereichen beziehungsweise ungehärteten zu vergleichsweise stärker gehärteten Bereichen und damit von vergleichsweise flexiblen zu vergleichsweise stabilen Bereichen in der Deckschicht kann dabei in besonders vorteilhafter Weise ein Negativstrukturieren der lackhaltigen Deckschicht ermöglichen, wie dies vorstehend mit Bezug auf das Verfahren beschrieben ist.

In einer weiteren Ausgestaltung des Paneels kann die lackhaltige Deckschicht einen Acrylat-basierten Lack aufweisen. Insbesondere kann die Deckschicht Acrylate aufweisen, die insbesondere modifiziert sein können durch Polyurethan beziehungsweise können Acrylat-/Polyurethan-Systeme Verwendung finden. Insbesondere derartige Lacksysteme können eine besonders kratz- und stoßfeste Deckschicht ausbilden, was das herzustellende Dekorpaneel besonders widerstandsfähig machen kann. Dabei wurde es erst durch die vorliegende Erfindung möglich, derartige Lacksysteme mit einer Negativstrukturierung zu versehen, um so einen besonders hochwertigen Struktureindruck mit den Vorteilen der Lackschicht zu ermöglichen.

In einer weiteren Ausgestaltung des Paneels kann die Deckschicht zumindest teilweise derart gehärtet sein, dass ein Vernetzungsgrad vorliegt in einem Bereich von ≥ 50% bis ≤ 90%, beispielsweise in einem Bereich von ≥ 65% bis ≤ 85%, besonders bevorzugt in einem Bereich von ≥ 70% bis ≤ 80%. Dabei kann der Vernetzungsgrad beispielsweise bestimmbar sein mittels Bestimmung des Gelgehalts nach DIN ISO 10147. In überraschender Weise hat sich gezeigt, dass insbesondere bei einem Teilhärten der Deckschicht beziehungsweise wenigstens einer, vorzugsweise sämtlicher, härtbaren Komponente der Deckschicht bis zu einem vorgenannten Bereich, eine hohe Flexibilität bei gleichzeitig hoher Stabilität erzeugt wird, so dass die vorbeschriebene Negativstrukturierung auch bei lackhaltigen Deckschichten möglich ist.

Dabei kann zusätzlich oder alternativ zu dem vorbeschriebenen Vernetzungsgrad die teilgehärtete Deckschicht zumindest teilweise, also etwa in einem Oberflächenbereich, wie dieser vorstehend mit Bezug auf einen Härtungsgradienten beschrieben ist, oder auch gänzlich eine Pendelhärte aufweisen beziehungsweise bis zu einer Pendelhärte gehärtet sein, die in einem Bereich von ≥ 65 bis ≤ 80 Sekunden liegt. Derartige Pendelhärten können weiter bevorzugt dazu beitragen, dass ein Einprägen einer definierten Struktur durch ein Prägemittel vorteilhaft möglich ist, jedoch eine eingeprägte Struktur bis zu einem Endhärten stabil bleibt. Grundsätzlich kann unter der Pendelhärte ein Maß für die Oberflächenhärte verstanden werden. Hierbei wird ein Pendel mit halbkugelförmigen Füßen auf die Lackoberfläche aufgesetzt. Das Pendel wird bis zu einem bestimmten Winkel ausgelenkt und losgelassen. Es wird dann die Zeit in Sekunden gemessen, die vergeht, bis das am ersten Punkt in Schwingung versetzte Pendel den zweiten Punkt nicht mehr berührt Je härter eine Beschichtung ist, desto länger schwingt das Pendel. Die Pendelhärte kann dabei insbesondere ermittelbar sein unter Anwendung der DIN ISO 1522 oder DIN 53157.

Erfindungsgemäß soll die Deckschicht eine Dicke aufweisen, die in einem Bereich von zwischen ≥ 1µm und ≤ 5mm, vorzugsweise zwischen ≥ 1µm und ≤ 20µm. Dabei können derartige Dicken besonders vorteilhaft sein für eine Negativstrukturierung, wobei die konkrete gewählte Dicke insbesondere abhängig sein kann von der konkreten Ausgestaltung.

Hinsichtlich weiterer technischer Merkmale und Vorteile des erfindungsgemäßen Dekorpaneels wird hiermit explizit auf die Erläuterungen im Zusammenhang mit dem erfindungsgemäßen Verfahren, den Figuren sowie der Figurenbeschreibung verwiesen.

Die Erfindung wird nachfolgend anhand von Figuren weiter erläutert. Dabei zeigen:
Fig. 1a)-d) einen schematischen Ablauf einer Ausgestaltung des erfindungsgemäßen Verfahrens; und
Fig. 2 a)-d) einen schematischen Ablauf einer weiteren Ausgestaltung des erfindungsgemäßen Verfahrens.

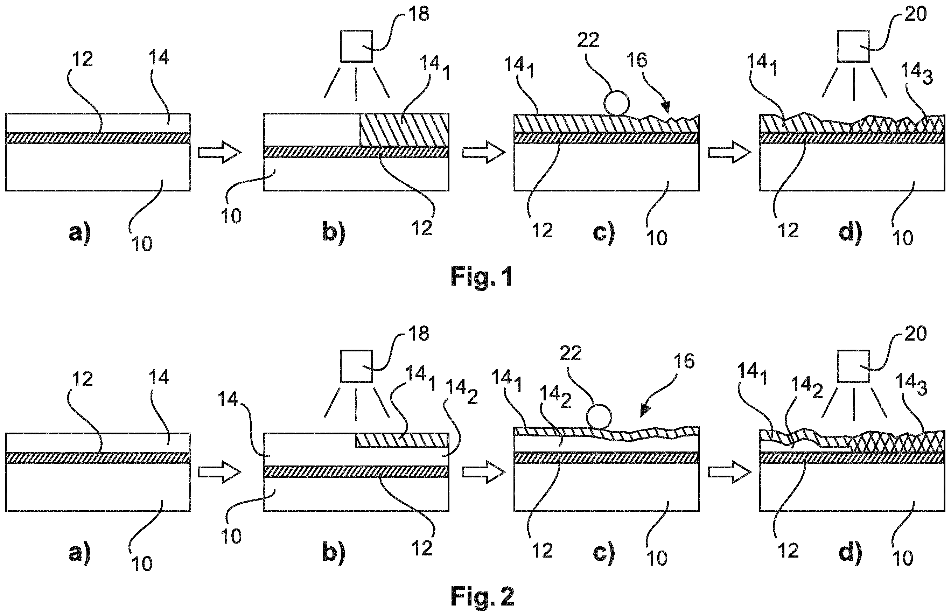

Fig. 1 zeigt in Fig. 1a) bis d) eine Ausgestaltung eines schematischen Verfahrensablauf eines erfindungsgemäßen Verfahrens. Dabei zeigt Figur 1a) einen Träger 10, der mit einem Dekor 12 beziehungsweise einer Dekorschicht und einer auf dem Dekor 12 aufgebrachten Deckschicht 14 versehen ist. Die Deckschicht weist eine Dicke auf, die in einem Bereich von zwischen ≥ 1µm und ≤ 5mm, vorzugsweise zwischen ≥ 1µm und ≤ 20µm, liegt. Die Deckschicht 14 ist dabei lackbasiert und kann insbesondere einen Acryllack, wie etwa ein Acryl-/PU-System aufweisen. Diese Anordnung wird in einem Verfahrensschritt, der in Figur 1b) gezeigt ist, durch eine Strahlungsquelle 18 gehärtet, wobei die Deckschicht 14 derart gehärtet wird, dass die Deckschicht 14 unter Ausbildung eines teilgehärteten Bereichs 14₁, der in Figur 1 der gesamten Deckschicht 14 entspricht, teilgehärtet wird.

Dabei können für eine Teilhärtung bestimmte Parameter besonders vorteilhaft sein.

Die Teilhärtung erfolgt durch die Strahlungsquelle 18 mit einer Leistung in einem Bereich von ≤ 80 W, beispielweise in einem Bereich von ≥ 5W bis ≤ 50 W, besonders bevorzugt ≥ 30W bis ≤ 40 W. Zusätzlich kann eine Strahlung mit einer Wellenlänge in einem Bereich von ≥ 200nm bis ≤ 380nm, beispielsweise in einem Bereich von ≥ 240nm bis ≤ 280nm, beispielsweise bei 254nm verwendet werden. Entsprechend kann die Strahlungsquelle 18 etwa ein Galliumstrahler sein. Nach dem Teilhärten kann der teilgehärtete Bereich 14₁ beispielsweise einen Vernetzungsgrad in einem Bereich von ≥ 50% bis ≤ 90%, beispielsweise ≥ 65% bis ≤ 85%, besonders bevorzugt in einem Bereich von ≥ 70% bis ≤ 80%, aufweisen, wobei der Vernetzungsgrad bestimmbar sein kann nach DIN ISO 10147. Zusätzlich oder alternativ kann es vorgesehen sein, dass die Deckschicht 14 zumindest teilweise eine Pendelhärte aufweist, die in einem Bereich von ≥ 65 bis ≤ 80 Sekunden liegt, wobei die Pendelhärte in an sich bekannter Weise ermittelbar ist nach König beziehungsweise Persoz und damit unter Anwendung der DIN EN ISO 1522 oder DIN 53157.

In der Figur 1c) ist ferner gezeigt, dass durch eine Negativstrukturierung unter Verwendung eines Prägemittels 22, wie einer Prägewalze, eine definierte Strukturierung 16 in die teilgehärtete Deckschicht 14₁ eingebracht werden kann.

In der Figur 1d) ist ferner gezeigt, dass die Deckschicht 14 unter Verwendung einer Strahlungsquelle 20 endgehärtet werden kann, etwa mit einer Leistung von 80-100W, beispielsweise mit einem Gallium-Quecksilber-Strahler als Strahlungsquelle 20. Anschließend kann der Träger 10 zu Paneelen geeigneter Größe zerkleinert werden für den Fall, dass die Dimensionierung des Trägers 10 die Größe der der gewünschten Paneele übersteigt.

In der Figur 2 ist eine weitere Ausführungsform des erfindungsgemäßen Verfahrens gezeigt, wobei das Verfahren in weiten Teilen dem in Figur 1 beschriebenen entspricht, so dass für eine detaillierte Beschreibung auf die vorstehenden Ausführungen zu Figur 1 verwiesen wird. In der Ausgestaltung gemäß Figur 2 wird die Deckschicht 14 gehärtet unter Ausbildung eines räumlichen Härtungsgradienten. Dies ist in der Figur 2b) zu erkennen, da ein teilgehärteter Bereich 14₁ der Deckschicht 14 an einem Oberflächenbereich der Deckschicht 14 stromabwärts einer Strahlungsquelle 18 beziehungsweise in Verfahrrichtung nach der Strahlungsquelle 18, entstanden ist, wohingegen in einem tieferen Bereich der Deckschicht 14 ein nicht oder nur vergleichsweise geringer gehärteter Bereich 14₂ vorliegt.

### Bezugszeichenliste

- 10: Träger
- 12: Dekor
- 14: Deckschicht
- 14₁: teilgehärteter Bereich
- 14₂: vergleichsweise gering gehärteter Bereich
- 14₃: endgehärteter Bereich
- 16: Strukturierung
- 18: Strahlungsquelle
- 20: Strahlungsquelle
- 22: Prägemittel

## Patentansprüche

1. Verfahren zum Herstellen eines Dekorpaneels, aufweisend die Verfahrensschritte:
a) Bereitstellen eines Trägers (10),
b) Aufbringen eines Dekors (12) auf zumindest einen Teilbereich des Trägers (10),
c) Aufbringen einer lackhaltigen Deckschicht (14) auf das Dekor, wobei
d) die lackhaltige Deckschicht (14) teilgehärtet wird; und
e) im Anschluss an das nur teilweise Härten der Deckschicht (14) diese mit einer Strukturierung (16) versehen wird, wobei
f) Verfahrensschritt e) zumindest teilweise durch eine Negativstrukturierung erfolgt; und
g) die lackhaltige Deckschicht nach Verfahrensschritt e) endgehärtet wird
**dadurch gekennzeichnet, dass**
die lackhaltige Deckschicht (14) mit einer Dicke aufgebracht wird, die in einem Bereich von zwischen ≥ 1µm und ≤ 5mm liegt, und das Teilhärten der lackhaltigen Deckschicht (14) durchgeführt wird unter Verwendung einer Strahlungsquelle (18) mit einer Leistung in einem Bereich von < 80 W, und dass ein Teilhärten der Deckschicht realisiert wird unter Ausbildung eines Härtungsgradienten und wobei der Härtungsgradient in Richtung der Dicke der Deckschicht (14) realisiert wird, wobei der Härtungsgradient in Richtung der Dicke der Deckschicht (14) derart ausgebildet wird, dass ein Oberflächenbereich der Deckschicht (14) vergleichsweise stärker gehärtet wird, als ein tiefergehender Bereich der Deckschicht (14).

2. Verfahren nach Anspruch 1, **dadurch gekennzeichnet, dass** der Abstand der Strahlungsquelle zu der zu strukturierenden Oberfläche der Deckschicht veränderbar ist.

3. Verfahren nach einem der vorhergehenden Ansprüche, **dadurch gekennzeichnet, dass** die lackhaltige Deckschicht (14) als Bestandteil einen Acrylat-basierten Lack aufweist.

4. Verfahren gemäß einem der vorhergehenden Ansprüche, **dadurch gekennzeichnet, dass** das Dekor (12) durch ein Direktdruckverfahren aufgebracht wird.

5. Dekorpaneel, aufweisend einen Träger (10), ein Dekor (12) und eine nicht strukturierte lackhaltige Deckschicht (14), **dadurch gekennzeichnet, dass** die nicht strukturierte Deckschicht (14) unter Verwendung einer Strahlungsquelle (18) mit einer Leistung in einem Bereich von ≤ 80 W teilgehärtet ist und eine Dicke aufweist, die in einem Bereich von zwischen ≥ 1µm und ≤ 5mm liegt, und das dass die Deckschicht mit einem Härtungsgradienten teilgehärtet ist und wobei der Härtungsgradient in Richtung der Dicke der Deckschicht (14) ausgebildet ist und wobei der Härtungsgradient in Richtung der Dicke der Deckschicht (14) derart ausgebildet ist, dass ein Oberflächenbereich der Deckschicht (14) vergleichsweise stärker gehärtet ist, als ein tiefergehender Bereich der Deckschicht (14).

6. Dekorpaneel nach Anspruch 5, **dadurch gekennzeichnet, dass** die lackhaltige Deckschicht (14) einen Acrylat-basierten Lack aufweist.

7. Dekorpaneel nach einem der Ansprüche 5 bis 6, **dadurch gekennzeichnet, dass** die Deckschicht zumindest teilweise derart gehärtet ist, dass ein Vernetzungsgrad vorliegt in einem Bereich von ≥ 50% bis ≤ 90%.

8. Dekorpaneel nach einem der Ansprüche 5 bis 7, **dadurch gekennzeichnet, dass** die Deckschicht (14₁) zumindest teilweise eine Pendelhärte aufweist, die in einem Bereich von ≥ 65 bis ≤ 80 Sekunden.

## Claims

1. a method for producing a decorative panel, comprising the steps of:
a) providing a carrier (10),
b) applying a decoration (12) onto at least a partial region of the carrier (10),
c) applying a lacquer -containing top layer (14) onto the decoration,
d) the lacquer-containing layer (14) is partially hardened; wherein
e) subsequently to the partially hardening of the top layer it is provided with a structure (16), wherein
f) process step e) is at least partially carried out by negative patterning; and
g) the lacquer-containing top layer is finally hardened after process step e), **characterized in that** the lacquer-containing top layer (14) is applied with a thickness which is in a range of between ≥ 1 µm and ≤ 5mm, and the partial curing of the lacquer-containing top layer (14) is carried out using a radiation source (18) with a power in a range of < 80 W, and **in that** a partial curing of the top layer is realized with the formation of a hardening gradient and wherein the hardening gradient is realized in the direction of the thickness of the top layer (14), wherein the hardening gradient in the direction of the thickness of the surface layer is formed in such a way that a surface area of the top layer (14) is hardened comparatively more than a deeper area of the top layer (14).

2. Method according to claim 1, **characterized in that** the distance of the radiation source to the surface to be structured of the top layer is variable.

3. Method according to any one of the preceding claims, **characterized in that** the lacquer-containing layer (14) comprises as a component an acrylate-based lacquer.

4. Method according to any one of the preceding claims, **characterized in that** the decoration (12) is applied by a direct printing process.

5. Decorative panel comprising a carrier (10), a decoration (12) and an unstructured lacquer-containing top layer (14), **characterized in that** the non-textured top layer (14) is partially cured using a radiation source (18) having a power in a range of ≤ 80 W and having a thickness which is in a range of between ≥ 1µm and ≤ 5mm, and that the top layer is partially hardened with a hardening gradient and wherein the hardening gradient is formed in the direction of the thickness of the top layer (14) and wherein the hardening gradient is formed in the direction of the thickness of the top layer (14) such that a surface region of the top layer (14) is comparatively more hardened than a deeper region of the top layer (14).

6. Decorative panel according to claim 5, **characterized in that** the lacquer-containing top layer (14) comprises an acrylate-based lacquer.

7. Decorative panel according to claim 5 or 6, **characterized in that** the top layer (14) is at least partially hardened such that a crosslinking degree in a range from ≥ 50% to ≤ 90% is obtained.

8. Decorative panel according to any one of claims 5 to 7, **characterized in that** the top layer (14₁) at least partially has a pendulum hardness in a range from ≥ 65 to ≤ 80 seconds.

## Revendications

1. Procédé de fabrication d'un panneau décoratif présentent les étapes de procédé :
a) de mise en place d'un support (10),
b) d'application d'un décor (12) sur au moins une zone partielle du support (10),
c) d'application d'une couche de revêtement (14) contenant une laque sur le décor, où
d) la couche de revêtement (14) contenant une laque est partiellement durcie ; et
e) à la suite du durcissement uniquement partiel de la couche de revêtement (14), celle-ci est munie d'une structuration (16), où
f) l'étape de procédé e) a lieu au moins partiellement par une structuration négative ; et
g) la couche de revêtement contenant une laque est complètement durcie après l'étape de procédé e)
**caractérisé en ce que**
la couche de revêtement (14) contenant une laque est appliquée avec une épaisseur qui se situe dans une plage entre ≥ 1 µm et ≤ 5 mm, et le durcissement partiel de la couche de revêtement (14) contenant une laque est effectué moyennant l'emploi d'une source de rayonnement (18) avec une puissance dans une plage < 80 W, et qu'un durcissement partiel de la couche de revêtement est réalisé moyennant la formation d'un gradient de durcissement et où le gradient de durcissement est réalisé en direction de l'épaisseur de la couche de revêtement (14), où le gradient de durcissement en direction de l'épaisseur de la couche de revêtement (14) est conçu de telle manière qu'une zone de surface de la couche de revêtement (14) est durcie plus fortement en comparaison d'une zone de la couche de revêtement (14) située plus en profondeur.

2. Procédé selon la revendication 1, **caractérisé en ce que** la distance de la source de rayonnement par rapport à la surface de la couche de revêtement à structurer est variable.

3. Procédé selon l'une des revendications précédentes, **caractérisé en ce que** la couche de revêtement (14) contenant une laque présente une laque à base d'un acrylate en tant que constituant.

4. Procédé selon l'une des revendications précédentes, **caractérisé en ce que** le décor (12) est appliqué par un procédé d'impression directe.

5. Panneau décoratif présentant un support (10), un décor (12) et une couche de revêtement (14) contenant une laque non structurée, **caractérisé en ce que** la couche de revêtement (14) non structurée est durcie partiellement moyennant l'emploi d'une source de rayonnement (18) pourvue d'une puissance dans une plage ≤ 80 W et présente une épaisseur qui se situe dans une plage entre ≥ 1 µm et ≤ 5 mm, et que la couche de revêtement est partiellement durcie avec un gradient de durcissement et où le gradient de durcissement est conçu en direction de l'épaisseur de la couche de revêtement (14) et où le gradient de durcissement en direction de l'épaisseur de la couche de revêtement (14) est conçu de telle manière qu'une zone de surface de la couche de revêtement (14) est durcie plus fortement en comparaison avec une zone de la couche de revêtement (14) située plus en profondeur.

6. Panneau décoratif selon la revendication 5, **caractérisé en ce que** la couche de revêtement (14) contenant une laque présente une laque à base d'un acrylate.

7. Panneau décoratif selon l'une des revendications 5 à 6, **caractérisé en ce que** la couche de revêtement est durcie au moins partiellement de sorte qu'un degré de mouillabilité est présent dans une plage ≥ 50 % à ≤ 90 %.

8. Panneau décoratif selon l'une des revendications 5 à 7, **caractérisé en ce que** la couche de revêtement (14) présente au moins partiellement une dureté au pendule qui est dans une plage ≥ 65 à ≤ 80 secondes.
